Europäisches Patentamt

European Patent Office

Office européen des brevets

(19)

(11) **EP 0 987 894 B1**

(12) **EUROPEAN PATENT SPECIFICATION**

(45) Date of publication and mention
of the grant of the patent:
**03.03.2004 Bulletin 2004/10**

(51) Int Cl.⁷: **H04N 7/24**, H04L 12/64

(21) Application number: **99304426.2**

(22) Date of filing: **08.06.1999**

(54) **A dejittering and clock recovery technique for real-time audio/visual network applications**

Jitterkorrektion und Taktrückgewinnung für audiovisuelle Echtzeitnetzwerkanwendungen

Correction du jitter et technique de récupération d'horloge pour des applications de réseaux audio-visuels temps réel

(84) Designated Contracting States:
**DE FR GB**

(30) Priority: **07.09.1998 SG 9803578**

(43) Date of publication of application:
**22.03.2000 Bulletin 2000/12**

(73) Proprietor: **VICTOR COMPANY OF JAPAN, LTD.**
**Yokohama-Shi, Kanagawa-Ken (JP)**

(72) Inventor: **XU, Jinghong**
**Singapore 760247 (SG)**

(74) Representative: **Crawford, Andrew Birkby et al**
**A.A. Thornton & Co.**
**235 High Holborn**
**London WC1V 7LE (GB)**

(56) References cited:
EP-A- 0 712 250          WO-A-95/22233
US-A- 5 633 871          US-A- 5 640 388
US-A- 5 790 543

• PALACHARLA S ET AL: "DESIGN AND IMPLEMENTATION OF A REAL-TIME MULTIMEDIA PRESENTATION SYSTEM USING RTP" PROCEEDINGS OF THE ANNUAL INTERNATIONAL COMPUTER SOFTWARE AND APPLICATIONS CONFERENCE (COMPSAC),US,LOS ALAMITOS, IEEE COMP. SOC. PRESS, vol. CONF. 21, 1997, pages 376-381, XP000740025 ISBN: 0-8186-8106-3

**Description**

Field of the Invention

This invention relates to a method for network dejittering and client/server timing synchronization in network (such as IP network) applications for real-time audio/visual services. This technique may be used for the A/V stream (i.e. MPEG stream) decoder to smooth the network jitter and to slave its timing to the encoder by a software approach. With this method, a client can playback the A/V streams over an IP network with no requirement of a PLL (Phase Lock Loop) circuit in the decoder.

Background of the Invention

With the continuing growing of Internet and IP-related technologies, there is a growing demand for access to multimedia application across a IP-based network. Unlike the traditional point-to-point network applications, emerging multimedia applications such as live or storage distance learning, TV broadcast directly to desktop via IP network, and desktop conferencing depend on the ability of multicasting for real-time services. The rising need for these kind of applications presents the challenge for network and end-systems. It is well known that the Internet has been used primarily for the reliable transmission of conventional data with minimal or no constraints of delay. Its protocols such as TCP/IP were well designed for this type of traffic using "Pull" mode. However, multimedia data such as audio and video are delay sensitive. Such traffic possesses different characteristics and may require different protocols in order to effectively provide real-time services. For digital A/V broadcast services, it requires appropriate "Push" mode operation with large uni-directional channel, with a small (or no) return channel required.

As one of the main requirements for an IP networked digital audio/visual system, people expect that the system will allow the ability to receive or playback audio/visual information over the IP network in a real-time fashion. However, due to the nature of the IP, low layer network access and platform dependant system clock, three main problem issues must be faced. One problem is the quality of service (QoS). A second problem is that there is a significant amount of delay variation (jitter) presented in an end-to-end system over IP network. When an MPEG system stream is transmitted over a jitter-inducing network, the real byte data delivery schedule may differ significantly from the intended delivery schedule. In such a situation, it is not possible to decode the system stream on a standard target decoder, because jitter may cause buffer overflows or underflows and also make it difficult to recover the time base. The third problem is the unmatched clocks (time drift) between server (encoder) and client (decoder). The time drift means that the free-running clock in the client will introduce some amount of timing difference over a given period of time when compared to the server's encoding clock since there is no guarantee of clock accuracy. The first problem relates to the issue of how to guarantee the bandwidth and delay for the data delivery over an IP network and is currently addressed by the IETF. Available technologies addressing this problem are: Resource Reservation Protocol (RSVP), Differential Service, Multi-Protocol Label Switching (MPLS), etc. The embodiments of the present invention are intended for addressing the other two problems. These two problems cause the difficulty for clients to decode data accurately and playback in a real-time mode using conventional technology.

The problem of using the existed technology in such a system can be illustrated by the example described below. For example. within an MPEG-2 system data stream there are clock time reference timestamps. These references are samples of the system time clock and have a resolution of one part in 27,000,000 per second. They occur at intervals up to 100 ms in Transport Streams (TS) or up to 700 ms in Program Streams (PS). In the PS, the clock field is called the System Clock Reference (SCR). In the TS, it is called the Program Clock Reference (PCR). The SCR (or PCR) field indicates the correct value of the STC (System Time Clock - a common time base) when the SCR (or PCR) is received at the decoder. In concept, this STC value is the same value that the encoder's STC had when the SCR (or PCR) was stored or transmitted. If the decoder's clock frequency matches exactly that of the encoder, then the decoding and presentation of audio/video will automatically have the same rate as those at the encoder. In practice, a decoder's system clock frequency will not precisely match the encoder's system clock frequency.

The decoder's STC can be made to slave its timing to the encoder using the received SCRs (or PCRs). The prototypical method of achieving such synchronization is via a Phase-Locked Loop (PLL). The details on the operation of PLL in this context may be found in ISO/IEC International Standard 13818-1, "Generic Coding of Moving Pictures and Associated Audio Information: Systems", July 1995. There is a bounded maximum interval between successive SCRs (or PCRs) in order to allow the operation of PLL to be stable. In a jitter introducing network, packet delay variation is considered to be quite significant for the MPEG Standard Target Decoder (STD). Such timing jitter at the input to a decoder is reflected in the combination of the values of SCRs (or PCRs) and the times when they are received. A significant SCRs (PCRs) jitter may cause the difficulty for the PLL to reach a defined locked state. The effect of such clock frequency mismatch between client and server is the gradual and unavoidable increase or decrease of the fullness of the decoder's buffers, such that overflow or underflow would occur eventually with any finite size of decoder buffers, therefore, effecting the system performance of the overall operation.

US5633871 discloses reducing the jitter of audio/video packets. When the value of the local clock corresponds to the time stamp, the packet is sent to the decoder.

It is an object of the present invention, to provide a technique for dejittering and clock recovery for use in the client application of a networked real-time audio/visual service system. It is desirable to be able to implement embodiments of the invention to synchronize the clients to a server in a jitter introducing network environment without employing additional devices or a special decoder.

Summary of the Invention

In accordance with the present invention, there is provided a method for clock variation compensation in an audio/visual system in which encoded A/V data in a plurality of data packets are delivered to at least one client over a network from a server at a substantially constant bit rate, said plurality of data packets including data packets containing time stamp data, the method comprising the steps of:

> receiving and buffering the data packets in a first buffer at a client;
> passing selected data packets from the first buffer to a second buffer at scheduled times based on a comparison between a local clock of the client and timestamp data corresponding to the selected data packets; and
> passing the data from the second buffer to a data decoder of the client.

Preferably the method includes monitoring the fullness of the second buffer to derive a drift rate, and adjusting the client local clock based on the derived drift rate.

The present invention further provides an audio/visual system coupled to receive data packets over a network for A/V decoding by an A/V decoder, the system including a clock variation compensation system comprising:

> a dejitter buffer for receiving and storing packets of data from the network;
> a synchronization buffer for feeding data for decoding to the A/V decoder;
> a decoder system clock; and
> a buffer data flow controller for controlling the passing of selected data packets from the dejitter buffer to the synchronization buffer in accordance with a comparison of a first signal derived from the decoder system clock and a second signal derived from a timestamp from the selected data packets.

The technique summarized below is a "software PLL-like" method to address the jitter and time synchronization for a client decoding system. It employs the RTP (Real-Time Transport Protocol) as the transport service and receiver buffering to achieve real-time A/V playback.

The dejittering process can be achieved by a dejittering buffer using the embedded timestamp values in the transport packets and client RTP clock (which runs at the same frequency as the A/V decoder's clock). The delay variations of data arriving are removed after the client buffering process, the data packet is shifted to a synchronizing buffer at the scheduled time of server encoder, then feed to the A/V decoder according to the time reference of A/V encoder. The clock synchronization (recovery) can be achieved by a synchronizing buffer based on a reference fill position and the movement of the fill position in the buffer (packet index oriented). By monitoring the fullness of the buffer over a given period, the drift rate of clock unsynchronization between client and server can be derived.

Brief Description of the Drawings

The invention is described in greater detail hereinafter, by way of example only, with reference to embodiments thereof which are described with the aid of the accompanying drawings, wherein:

> Figure 1 schematically illustrates a networked system for real-time audio/visual services comprising a plurality of client host and a server;
> Figure 2 schematically illustrates a client host comprising a dejittering buffer and a software PLL-like architecture, wherein dejittering and clock recovering is achieved in accordance with an embodiment of the present invention; and
> Figure 3 diagrammatically illustrates the mechanism of timing synchronization via monitoring the position movement of the dejittering buffer.

Detailed Description of the Preferred Embodiments

In this specification, various aspects of the Real-Time Transport Protocol (RTP) and Resource Reservation Protocol (RSVP) are referred to. and a more detailed description of the mechanisms, protocols and systems involved in implementing RTP and RSVP can be found in the following documents, the disclosures of which are incorporated herein by reference:

> "RTP: A Transport Protocol for Real-Time Applications", H. Schulzrinne, S. Casner, R. Frederick, V. Jacobson; RFC 1889, January 1996.
> "RTP Profile for Audio and Video Conferences with Minimal Control", H. Schulzrinne; RFC 1890, January 1996.
> "RTP Payload Format for MPEG1/MPEG2 Video", D. Hoffman, G. Fernando, V. Goyal, M.R. Civanlar; draff-ietf-avt-mpeg-new-01, Internet draft, June 1997.

"RTP Payload Format for Bundled MPEG", M.R. Civanlar, G.L Cash, B.G Haskell; draft-civanlar-bmpeg-01, Internet draft, February 1997.

"Resource ReSerVation Protocol (RSVP) Version 1 Function Specification", R. Braden, L. Zhang. S. Berson, S. Herzog, S Jamin, draft-ietf-rsvp-spec-16, Internet draft, June 1997.

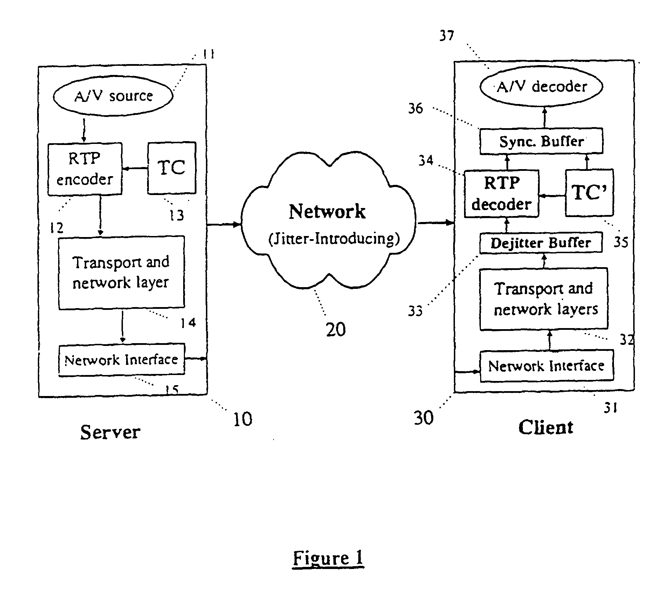

A system model for real-time services over a jitter introducing network is illustrated in block diagram form in Figure 1. In the Figure, an A/V client server arrangement is shown, wherein a client 30 is connected to a sever 10 via a network 20. The server 10 includes a source of audio/video streams 11, a RTP encoder 12, a server encoding system clock 13, transport and network layers 14 and a network interface 15. The client 30 includes a network interface 31, transport and network layers 32, a dejittering buffer 33, a RTP decoder 34, a client decoding system clock 35, a time synchronizing buffer 36 and an audio/video decoder 37. The network 20 is a jitter introducing network, such as IP-based network. The overall operation of the present invention in this environment is described hereinbelow.

At the server 10, AV stream source 11 is input to the RTP encoder 12. The output of RTP encoder 12 are RTP packets where their payload field contain data from source 11. These packets are timestamped by the server system encoding clock 13, and then sent out to the client through the network 20 at constant bit rate. At the client 30, the RTP packets (containing AV stream data in payload field) received from the network are put into the dejittering buffer 33 in sequence. The RTP packets in dejittering buffer 33 are decoded by the RTP decoder 34 and client decoding system clock 35, and then shifted into the time synchronizing buffer 36. In other words. the synchronizing buffer 36 will contain all the original A/V stream data from A/V source 11. These A/V stream data will then be fed into A/V decoder according to their appropriate time scheduling.

The desirable size of the dejittering buffer depends only on the maximum network jitter $J_{max}$ (peak-to-peak) and the maximum bit rate of A/V streams $R_{max}$. Assume the difference of clock counting between the server and client over the period of updating ($T$, which for example can be default to 1 minute) is $t$. The size of the dejittering buffer can be determined by:

$$B_{dj} = (J_{max} + t) \times R_{max}$$

For example, if $J_{max}$ = 100ms, $R_{max}$ = 8Mbps and $t$ = 10 ms, then the required minimum buffer size is,

$$B_{dj} = (100 + 10) \times 8 \times 10^6 = 880,000 - bit$$

$$= 880,000 / 8 \ (Bytes) = 110,000 - byte < 128 \ kBytes$$

Therefore, a size of 128 kBytes buffer should be adequate for most situations if a certain level of QoS is also guaranteed.

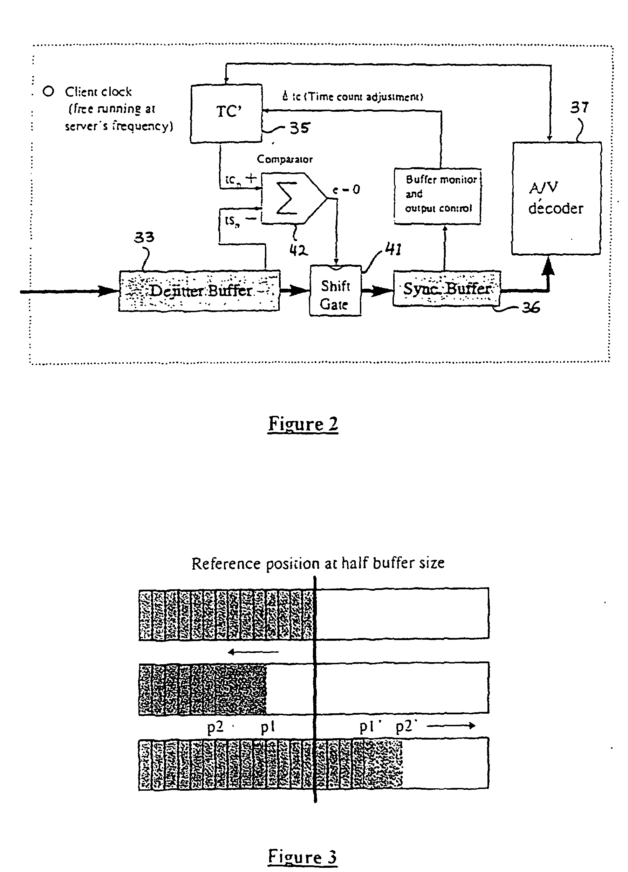

Figure 2 is a block diagram of the dejittering and clock recovering operation in accordance with an embodiment of the present invention. In this diagram, and the following description:

| | |
|---|---|
| TC' | is the time counter of the client's RTP clock |
| $tc_n$ | is the time counter value for the $n^{th}$ packet |
| $ts_n$ | is the time timestamp value of the $n^{th}$ packet in the dejitter buffer |
| tc | is the adjustment value for TC, when necessary. |

As detailed in the block diagram of Figure 2, the dejittering process is done based on the encoded RTP timestamp value and client's RTP clock. At the first step, the client buffer provides the function of buffering by way of dejitter buffer 33, which removes the jitter in terms of client reception. The dejitter buffer 33 is coupled to pass data to the synchronizing buffer 36 by way of a shift gate 41. The shift gate 41 is controlled by the output of a comparator 42 which has inputs $tc_n$ from the client's RTP clock time counter and $ts_n$ retrieved from the dejitter buffer. The data is shifted to the synchronizing buffer 36 whenever the timestamp value ($ts_n$) encoded in the packet is equal to the client's time counter value ($tc_n$). The packets in the synchronizing buffer are A/V data packets. Such data packets are fed to the A/V decoder (e.g. MPEG decoder) based on their own embedded time schedule. It should be noted here that in the case of a system decoder the decoder internal system buffer can be used as the synchronizing buffer if it is accessible from the client.

The clock synchronization between client and server is achieved via monitoring the packet position in the synchronizing buffer. The size of the synchronizing buffer can be quite small since it only needs to handle the clock drift. The operation is illustrated in Figure 3 which is a diagram of buffer monitoring for time synchronization. Here the operation of the clock recovery process is based on the buffer position change compared with the reference position (defined as the buffer half-size position) for a given period $T$ (for example, every minute). If the buffer position is moving in the direction of emptiness, the counter TC' should be upwardly adjusted by adding an offset. If the buffer position is moving in the other direction (fullness), the TC' value should be downwardly adjusted. The drift rate $r$ of clock unsynchronization between server and client can be determined by:

$$r = (p_2 - p_1) / T$$

It should be noted that the buffer position mentioned above is in terms of packet index offset rather than the byte number offset.

It is also possible to implement the present technique with the use of one buffer only (no additional synchronizing buffer available). In such case, data packets are fed into the A/V decoder directly from the dejittering buffer at the scheduled time. The above clock drift rate $r$ will include the component of network jitter $J$ and should be eliminated before the TC' is adjusted. The interarrival jitter $J$ can be derived from the two sequenced RTP packets. The jitter $J$ is defined to be the mean deviation of the difference ($D$) in packet spacing at the receiver compared to the sender for a pair of packets. For example, if $T_{sa}$ is the RTP timestamp from packet $a$, and $T_{rb}$ is the time of arrival in RTP timestamp units for packet $b$. then for these two packets, we have,

$$j = D\ (a,b)$$
$$=(T_{ra} - T_{rb}) - (T_{sb} - T_{sa})$$
$$=(T_{rb} - T_{sb}) - (T_{ra} - T_{sa})$$

The $j$ is calculated continuously as each data packet is received from server, then according to the formula, we have,

$$J = J + (|j| - J)\ /\ 16$$

This algorithm provides an optimal first-order estimator and the gain parameter 1/16 gives a good noise reduction ratio while maintaining a reasonable rate of convergence (see RTP specification and related references).

Unlike the traditional method (using a PLL circuitry) and other available technique (such as that disclosed in European patent No. EP779725, entitled "Method and Apparatus for Delivering Simultaneous Constant Bit Rate Compressed Video Streams At Arbitrary Bit Rates with Constrained Drift and Jitter", which uses two levels of synchronization named coarse-grain and fine-grain for video streams to control drift and jitter), the present method is a more independent and less constrained client-based approach. It provides the network adaptability via a simple software solution (can be implemented in hardware as well) for an end system and can be applied in a wide range of network applications. The effect of the present technique includes:

    increasing the adaptability of decoding systems (in terms of dejittering and clock synchronization);
    simplifying the decoder implementation (no PLL circuitry required);
    handling more types of audio/visual streams (not only MPEG2 system streams);
    application to different types of environments (unicast as well as multicast);
    beneficial to the effort of expanding rea-time A/V services over IP-based network such as Internet.

## Claims

1. A method for checking variation compensation in an audio/visual system in which encoded A/V data in a plurality of data packets are delivered to at least one client over a network from a server at a substantially constant bit rate, said plurality of data packets including data packets containing timestamp data, the method comprising the steps of:

    receiving and buffering the data packets in a first buffer at a client;
    passing selected data packets from the first buffer to a second buffer at scheduled times based on a comparison between a local clock of the client and timestamp data corresponding to the selected data packets; and
    passing the data from the second buffer to a data decoder of the client.

2. A method as claimed in claim 1, including monitoring the fullness of the second buffer to derive a drift rate, and adjusting the client local clock based on the derived drift rate.

3. A method as claimed in claim 1 or 2, wherein the scheduled time is determined by a substantially zero difference between the value of a said timestamp data corresponding to the selected data packets and a clock counter from the client local clock.

4. A method as claimed in claim 2, wherein the drift rate is derived according to:

$$r=(p2-p1)/T$$

    where:

        $r$ is the derived drift rate, and
        $p2$ and $p1$ are two corresponding buffer positions for a given period of time $T$.

5. An audio/visual system coupled to receive data packets over a network for A/V decoding by an A/V decoder, the system including a clock variation compensation system comprising:

        a dejitter buffer for receiving and storing packets of data from the network;
        a synchronization buffer for feeding data for decoding to the A/V decoder;
        a decoder system clock; and
        a buffer data flow controller for controlling the passing of selected data packets from the dejitter buffer to the synchronization buffer in accordance with a comparison of a first signal derived from the decoder system clock and a second signal derived from a timestamp from the selected data packets.

6. A system as claimed in claim 5, further including a clock adjustment controller coupled to monitor a measure of the fullness of one of the synchronization and dejitter buffers, and coupled to the decoder system clock to allow adjustment thereof based on the buffer fullness measurement.


**Patentansprüche**

1. Verfahren zur Überprüfung der Variationskompensation in einem audiovisuellen System, wobei kodierte A/V-Daten in mehreren Datenpaketen an zumindest einen Client über ein Netz von einem Server mit einer im wesentlichen konstanten Bitrate geschickt werden, wobei mehrere Datenpakete Datenpakete aufweisen, die zeitprotokollierte Daten enthalten, wobei das Verfahren die folgenden Schritte aufweist:

   Empfangen und Puffern der Datenpakete in einem ersten Puffer bei einem Client;
   Weitergeben ausgewählter Datenpakete von dem ersten Puffer an einen zweiten Puffer zu planmäßigen Zeiten, die auf einen Vergleich zwischen einem lokalen Zeitgeber des Clients und zeitprotokollierten Daten basieren, die den ausgewählten Datenpaketen entsprechen; und
   Weitergeben der Daten von dem zweiten Puffer zu einem Datendekodierer des Clients.

2. Verfahren nach Anspruch 1, bei dem die Belegung des zweiten Puffers überwacht wird, um eine Driftrate abzuleiten, und bei dem der lokale Taktgeber des Clients auf der abgeleiteten Driftrate basierend angepaßt wird.

3. Verfahren nach Anspruch 1 oder 2, wobei die planmäßige Zeit durch im wesentlichen einen Nullunterschied zwischen dem Wert der zeitprotokollierten Daten, die den ausgewählten Datenpaketen entsprechen, und einem Taktzähler von dem lokalen Taktgeber des Clients bestimmt wird.

4. Verfahren nach Anspruch 2, wobei die Driftrate abgeleitet wird gemäß:

$$r = (p2-p1)/T,$$

wobei

r die abgeleitete Driftrate und
p2 und p1 die entsprechenden Pufferpositionen für ein vorgegebenes Zeitintervall T sind.

5. Ein audiovisuelles System, das gekoppelt ist, um Datenpakete über ein Netz zum A/V-Dekodieren durch einen A/V-Dekodierer zu empfangen, wobei das System ein System für die Taktvariationskompensation umfaßt, das aufweist:

   einen Dejitter-Puffer zum Empfangen und zum Speichern von Datenpaketen von dem Netzwerk;
   einen Synchronisationspuffer zum Zuführen von Daten zum Dekodieren zu dem A/V-Dekodierer;
   einen Zeitgeber des Dekodierersystems; und
   eine Steuerung für den Pufferdatenfluß, um das Weitergeben ausgewählter Datenpakete von dem Dejitter-Puffer zu dem Synchronisationspuffer gemäß einem Vergleich zwischen einem ersten Signal, das von dem Taktgeber des Dekodierersystems abgeleitet ist, und einem zweiten Signal, das von einem Zeitprotokoll der ausgewählten Datenpakete abgeleitet ist, zu steuern.

6. System nach Anspruch 5, das außerdem eine Steuerung für die Taktanpassung aufweist, die gekoppelt ist, um ein Maß der Belegung von entweder dem Synchronisationspuffer oder dem Dejitter-Puffer zu überwachen, und mit dem Taktgeber des Dekodierersystems gekoppelt ist, um dessen Anpassung auf Grundlage der Messung der Pufferbelegung zu ermöglichen.


**Revendications**

1. Procédé pour vérifier la compensation de la fluctuation d'un système audio visuel dans lequel des données A / V codées dans une pluralité de paquets de données sont fournies à au moins un client sur un réseau à partir d'un serveur qui possède un débit binaire sensiblement constant, ladite pluralité de paquets de données comprenant des paquets de données qui contiennent des données horodatées, le procédé comprenant les étapes consistant à :

   recevoir et tamponner les paquets de données dans un premier tampon situé au niveau d'un client ;
   transférer les paquets de données sélectionnés à partir du premier tampon vers un second tampon à des instants prévus sur la base d'une comparaison entre une horloge locale du client et les données horodatées qui correspondent aux paquets de données sélectionnés ; et à

transférer les données à partir du second tampon vers un décodeur de données du client.

2. Procédé selon la revendication 1, comprenant la surveillance de l'état plein du second tampon pour dériver un taux de dérive, et ajuster l'horloge locale du client sur la base du taux de dérive dérivé.

3. Procédé selon l'une quelconque des revendications 1 ou 2, dans lequel l'instant prévu est déterminé par une différence sensiblement nulle entre la valeur desdites données horodatées qui correspondent aux paquets de données sélectionnés et un compteur d'horloge provenant de l'horloge locale du client.

4. Procédé selon la revendication 2, dans lequel le taux de dérive est dérivé selon :

$$r = (p2 - p1)/T$$

où:

$r$ est le taux de dérive dérivé, et
$p2$ et $p1$ sont deux positions correspondantes du tampon pendant une période donnée T.

5. Système audio visuel couplé pour recevoir des paquets de données sur un réseau pour être décodées par un décodeur A / V, le système comprenant un système de compensation de la fluctuation de l'horloge qui comprend :

un tampon de suppression de la gigue pour recevoir et stocker des paquets de données qui proviennent du réseau. ;
un tampon de synchronisation pour fournir des données à décoder au décodeur A / V ;
une horloge système de décodeur ; et
un contrôleur du flux de données du tampon pour commander le transfert des paquets de données sélectionnés, à partir du tampon de suppression de la gigue vers le tampon de synchronisation, selon une comparaison entre un premier signal dérivé de l'horloge système du décodeur et un second signal dérivé d'un horodatage provenant des paquets de données sélectionnés.

6. Système selon la revendication 5, comprenant de plus un contrôleur de réglage d'horloge couplé pour surveiller une mesure de l'état plein de l'un des tampons de synchronisation et de suppression de la gigue, et couplé à l'horloge système du décodeur pour permettre un réglage de celle-ci sur la base de la mesure de l'état plein du tampon.

## Figure 1

**Figure 2**

Reference position at half buffer size

p2   p1        p1'   p2' ⟶

**Figure 3**